# EUROPÄISCHE PATENTANMELDUNG

(11) **EP 0 882 917 A2**
(43) Veröffentlichungstag der Anmeldung: **09.12.1998**
(21) Anmeldenummer: 98109949.2
(22) Anmeldetag: 30.05.1998
(51) Int. Cl.: F16K 15/20

(54) **Leichtpumpventil für Fahrradschläuche**

(30) Priorität: 04.06.1997 DE 29709696 U
(71) Anmelder: Ralf Bohle GmbH, 51580 Reichshof (DE)
(72) Erfinder: Holger, Jahn, 51702 Bergneustadt (DE)
(74) Vertreter: Wilhelm & Dauster Patentanwälte European Patent Attorneys

(57) **Zusammenfassung**

Bei Verwendung von Leichtpumpventilen, die auch unter dem Namen Blitzventil bekannt sind, für Fahrradschläuche läßt sich eine Messung des Schlauchinnendruckes nicht durchführen.

Es wird vorgeschlagen, bei einem Leichtpumpventil den Einsatzkegel mit einem Stift bis zum freien Ende des Kegelkörpers zu verlängern. Durch diese Ausgestaltung kann ein bekanntes Druckprüfgerät vorgesehen werden, das einen auf das freie Ende des Einsatzkegels aufsetzbaren Anschlußkopf aufweist, mit dem der Stift gegen Federwirkung nach unten gedrückt wird, so daß der Druck meßbar ist.

Verwendung für Fahrradschläuche

## Beschreibung

Die Erfindung betrifft ein Leichtpumpventil für Fahrradschläuche o.dgl. mit einem Ventilkörper zur Befestigung am Schlauch, mit einem in diesen Ventilkörper einsetzbaren hohlen Kegelkörper, der mit einem Dichtring gegen eine Gegenfläche des Ventilkörpers durch eine Überwurfmutter drückbar ist, sowie mit einem in dem Kegelkörper im Abstand zu dessen aus dem Ventilkörper herausragenden freien Ende angeordneten Einsatzkegel, der mit einem Dichtring an eine Gegenschulter des Kegelkörpers unter dem Innendruck im Schlauch andrückbar ist.

Solche Leichtpumpventile, die zum Teil auch unter dem Namen "Blitzventil" bekannt sind, sind Ventile, die als Rückschlagventileinsatz ausgebildet sind und die anstelle der sonst üblichen Ventile für Fahrradschläuche, die einen Ventilkegel mit einer von einem Ventilschlauch abschließbaren Öffnung haben, in die fest mit dem Schlauch verbundenen Ventilkörper einsetzbar sind.

Leichtpumpventile dieser Art sind beispielsweise in dem Prospektblatt "Das Blitzventil" der Firma Alligator Ventilfabrik GmbH, Giengen/Brenz, beschrieben. Der dort verwendete Einsatzkegel sitzt am spätere innen gelegene Ende eines sogenannten Kegeleinsatzes, der dicht - ebenso wie auch die anderen bekannten Ventileinsätze - in dem mit dem Schlauch verbundenen Ventilkörper durch eine Überwurfmutter gehalten wird. Der Einsatzkegel wird dabei ausschließlich durch den Druck im Inneren des Schlauches gegen seinen Ventilsitz gedrückt. Da er von außen nicht zugängig ist, ist eine Messung des Schlauchinnendruckes bei mit solchen Leichtpumpventilen ausgerüsteten Fahrradschläuchen ebenso unmöglich wie bei mit den üblichen vorher erwähnten Ventilen nach DIN 7758 und 7768 ausgerüsteten Fahrradschläuchen.

Der vorliegenden Erfindung liegt die Aufgabe zugrunde, ein Leichtpumpventil der eingangs genannten Art so auszubilden, daß eine Messung des Innendruckes möglich wird.

Die erfindungsgemäße Aufgabe wird bei einem Leichtpumpventil der eingangs genannten Art dadurch gelöst, daß der Einsatzkegel mit einem Stift bis zum freien Ende des Kegelkörpers verlängert ist. Dieser Stift wird zweckmäßig einteilig mit dem Einsatzkegel hergestellt, wobei in Weiterbildung der Erfindung der Stift durch eine Feder in Richtung zum freien Ende gedrückt werden kann, die als eine Wendelfeder ausgebildet werden kann, die den Stift umgibt, unten an einem Absatz im Kegelkörper aufsitzt und oben von einer am Ende des Stiftes angebrachten Scheibe gehalten ist. Diese Ausgestaltung ermöglicht es nun, ein - an sich bekanntes - Druckprüfgerät vorzusehen, das durch einen auf das freie Ende des Einsatzkegels aufsetzbaren Anschlußkopf gekennzeichnet ist, der mindestens eine in einer Ausnehmung angeordnete Ringdichtung und einen Betätigungszapfen für den Stift des Einsatzkegels aufweist. Beim Aufsetzen des Anschlußkopfes wird somit der Stift gegen die Federwirkung nach unten gedrückt, löst dabei den Einsatzkegel von seinem Sitz und gibt eine Verbindung vom Schlauchinnenraum zum Anschlußkopf frei. Der Anschlußkopf ist über einen Kanal mit einem durch einen federbelasteten Kolben abgedichteten Raum eines Zylinders verbunden, wobei an den Kolben ein vorzugsweise zylindrischer Stift angrenzt, der mit einer Druckwertskala versehen und durch eine abgedichtete Öffnung am vom Anschlußkopf abgewandten Ende des Zylinders mindestens zum Teil durchgeschoben ist.

Das Druckprüfgerät erlaubt es daher, den Innendruck des Fahrradschlauches zu messen, wenn das erfindungsgemäße Leichtpumpventil vorgesehen ist.

Die Erfindung ist anhand eines Ausführungsbeispieles in der Zeichnung dargestellt und wird im folgenden erläutert. Es zeigen:
- Fig. 1: eine Seitenansicht eines erfindungsgemäßen Leichtpumpventiles, dessen rechte Hälfte aufgeschnitten ist,
- Fig. 2: den Längsschnitt durch ein Druckprüfgerät für einen mit dem Leichtpumpventil nach Fig. 1 ausgerüsteten Fahrradschlauch und
- Fig. 3: die Ansicht des Druckprüfgerätes der Fig. 2 in Richtung des Pfeiles III der Fig. 2 gesehen.

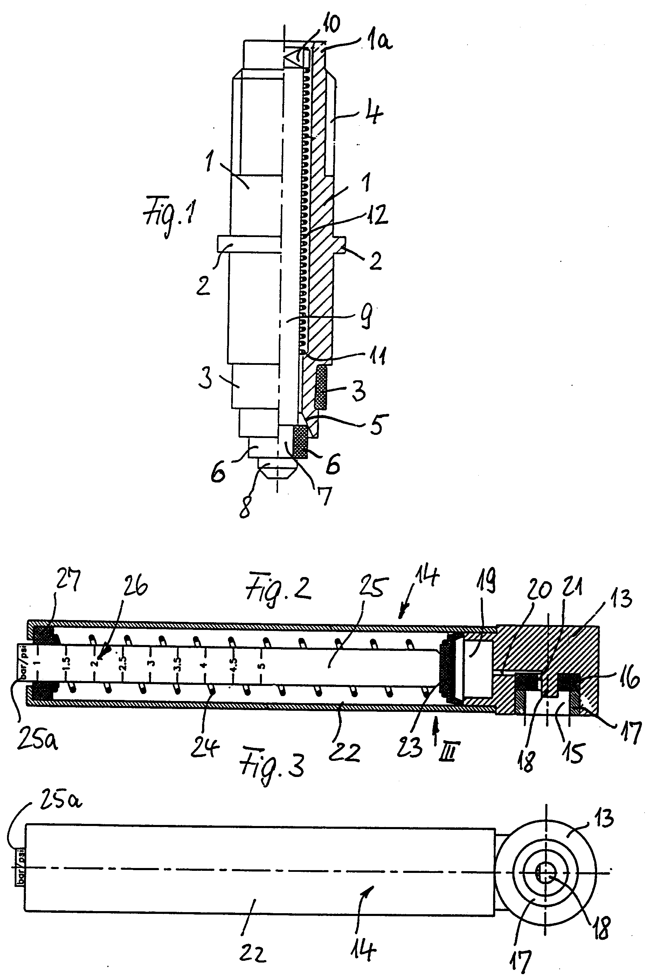

In der Fig. 1 ist der sogenannte Kegelkörper 1 eines Leichtpumpventils gezeigt, der in einen nicht gezeigten, weil bekannten Ventilaufnahmekörper eines Fahrradschlauches eingesetzt werden und durch eine, ebenfalls nicht gezeigte Überwurfmutter in diesem Ventilkörper gehalten wird. Der Kegelkörper 1 ist zu diesem Zweck mit einem umlaufenden Bund 2 versehen, an dem sich die Überwurfmutter anlegt, die dann auf ein Außengewinde des Ventilaufnahmekörpers aufgeschraubt wird. Dabei drückt sich ein Dichtungsring 3 fest an einen Ansatz im Inneren des Ventilaufnahmekörpers an, so daß der Kegelkörper 1 dicht am Fahrradschlauch gehalten ist.

Der Kegelkörper 1 seinerseits ragt mit seinem freien Ende 1a, das oberhalb des Bundes 2 liegt, aus dem Ventilaufnahmekörper heraus und besitzt seinerseits ein Außengewinde 4 zum Aufschrauben einer Staubkappe.

An seinem unteren Ende ist der Kegelkörper 1 mit einem konischen Ventilsitz 5 versehen, an den sich ein Dichtring 6 anlegt, der fest in einer umlaufenden Nut 7 eines Einsatzkegels 8 gehalten ist. Dieser Einsatzkegel 8 ist durch den hohlen Kegelkörper 1 hindurch mit einem Stift 9 verlängert, der zylindrisch ausgebildet ist und an seinem oberen Ende eine Abschlußscheibe 10 trägt, deren Durchmesser größer als jener des Stiftes 9 ist. Zwischen dieser Abschlußscheibe 10 und einem nach innen gerichteten Absatz 11 des Kegelkörpers 1 ist eine Wendelfeder 12 gehalten, die dafür sorgt, daß der Stift und mit ihm der Einsatz 8 und dessen Dichtring 6 gegen den Dichtkonus 5 gezogen werden.

Wird nun auf das freie Ende 1a dieses Einsatzkegelkörpers 1 im eingebauten Zustand desselben der Kopf einer Luftpumpe aufgesetzt und diese betätigt, dann wird der Stift und der Einsatzkegel 8 wegen der Wirkung des von der Pumpe ausgeübten Druckes nach unten geschoben und nach jedem Pumpenhub durch die Wirkung der Feder 12 wieder nach oben geführt, bis der Zugang zum Schlauchinneren wieder geschlossen ist. Dabei ist die Wirkung der vom Leichtpumpventil der Fig. 1 ausgeübten Gegenkraft gegen die Pumpwirkung ähnlich gering, wie auch bei den bekannten Leichtpumpventilen, so daß der Aufpumpvorgang für den Fahrradschlauch äußerst einfach und schnell vor sich gehen kann.

Im Gegensatz zu der Verwendung bekannter Leichtpumpventile läßt sich jedoch bei Verwendung des neuen Leichtpumpventiles der Schlauchinnendruck sehr leicht durch ein Druckprüfgerät nach den Fig. 2 und 3 dadurch messen, daß der Anschlußkopf 13 des Druckprüfgerätes 14 der Fig. 2 mit seiner Ausnehmung 15 auf das freie Ende 1a des Einsatzkegelkörpers 1 aufgesetzt wird. Die eingelegte Scheibendichtung 16 und der Dichtring 17 sorgen dabei dafür, daß das freie Ende 1a dicht innerhalb des Anschlußkopfes 13 gehalten ist. Durch das Aufsetzen des Anschlußkopfes 13, der in die Ausnehmung 15 hereinragend einen Betätigungszapfen 18 aufweist, wird die Scheibe und der Stift 9 mit dem Einsatzkegel 8 nach unten gedrückt, so daß die Verbindung zum Schlauchinneren hergestellt ist. Da zwischen der Scheibe 16 und dem Betätigungszapfen 18 und auch zwischen Aufsetzkopf 13 und einem seitlich daran angrenzenden Zylinderraum 19 Verbindungskanäle 20, 21 bestehen, wird der Schlauchinnendruck auf den Raum 19, der noch Teil des Anschlußkopfes 13 ist, geleitet.

Angrenzend an den Raum 19, der Teil eines Anschlußzapfens ist, ist ein Zylinder 22 vorgesehen, in dem ein aus elastischem Material bestehender Kolben 23 geführt ist, der unter der Wirkung einer Wendelfeder 24 gegen den Stirnanschlag des Anschlußzapfes gedrückt ist, der den Raum 19 umgibt. Die Wendelfeder 24 umgibt einen zylindrischen Stift 25, der mit einer Druckwertskala 26 versehen und mit seinem freien Ende 25a aus dem Zylinder 22 seitlich herausgeführt ist. Der Stift 25 liegt mit seinem anderen Ende an dem Kolben 23 an und ist am freien Ende 25a durch einen Führungsring 27 aus dem Zylinder 22 herausgeführt.

Wird daher durch den Betätigungszapfen 18 des Anschlußkopfes 13 der Stift 9 des Leichtpumpventils der Fig. 1 nach unten gedrückt und herrscht daher im Raum 19 der Innendruck des Fahrradschlauches, dann wird, je nach Höhe des Druckes, der Kolben 23 und mit ihm der Stift 25 nach links verschoben, bis ein Kräftegleichgewicht zwischen der Feder 24 und der vom Luftdruck auf den Kolben 23 ausgeübten Kraft besteht. Die Kraft der Feder 24 ist geeicht, und entsprechend ist die Druckmeßwertskala 26 ausgelegt. An dem herausragenden freien Ende 25a des Stiftes 25 kann daher der im Fahrradreifen herrschende Luftdruck abgemessen werden.

## Patentansprüche

1. Leichtpumpventil für Fahrradschläuche o.dgl. mit einem Ventilkörper zur Befestigung am Schlauch, mit einem in diesen Ventilkörper einsetzbaren hohlen Kegelkörper (1), der mit einem Dichtring (3) gegen eine Gegenfläche des Ventilkörpers durch eine Überwurfmutter drückbar ist, sowie mit einem in dem Kegelkörper (1) im Abstand zu dessen aus dem Ventilkörper herausragenden freien Ende (1a) angeordneten Einsatzkegel (8), der mit einer Dichtung (6) an eine Gegenschulter (5) des Kegelkörpers (1) unter dem Innendruck im Schlauch andrückbar ist, dadurch gekennzeichnet, daß der Einsatzkegel (8) mit einem Stift (9) bis zum freien Ende (1a) des Kegelkörpers (1) verlängert ist.

2. Leichtpumpventil nach Anspruch 1, dadurch gekennzeichnet, daß der Stift (9) und der Einsatzkegel (8) einteilig ausgebildet sind.

3. Leichtpumpventil nach Anspuch 1 oder 2, dadurch gekennzeichnet, daß der Stift (9) durch eine Feder (12) in Richtung zum freien Ende (1a) des Kegelkörpers (1) gedrückt ist.

4. Leichtpumpventil nach Anspruch 3, dadurch gekennzeichnet, daß die Feder eine Wendelfeder (12) ist, die den Stift (9) umgibt, unten an einem Absatz (11) im Kegelkörper (1) aufsitzt und oben von einer am Ende des Stiftes (9) angebrachten Scheibe (10) gehalten ist.
